# EUROPEAN PATENT APPLICATION

(11) **EP 4 799 751 A1**
(43) Date of publication of application: **02.09.2026**
(21) Application number: 25160418.7
(22) Date of filing: 26.02.2025
(51) Int. Cl.: B23K 26/03, B23K 26/38, B23K 26/40, H01M 4/04, B23K 101/38

(54) **METHOD AND CUTTING DEVICE FOR CUTTING A COATED SUBSTRATE WITH AN ENERGY BEAM**

(71) Applicant: TRUMPF Laser- und Systemtechnik SE, 71254 Ditzingen (DE); Precitec GmbH & Co. KG, 76571 Gaggenau (DE)
(72) Inventor: Kiefer, Florian, 71116 Gärtringen (DE); Gabzdyl, Jacek, East Blodre Hants, SO42 7WF (GB); Schäfer, Marcel, 77839 Lichtenau (DE); Klasing, Manfred, 76275 Ettlingen (DE); Boco, Attila, 76571 Gaggenau (DE); Reiser, Jens, 76287 Rheinstetten (DE)
(74) Representative: Gleiss Große Schrell und Partner mbB

(57) **Abstract**

The invention relates to a method for cutting, with an energy beam (7), a coated substrate (3), comprising a substrate material (21) and a coating material (19) wherein
- during cutting the coated substrate (3), an actual cutting region (11) is monitored by a sensor device (9), wherein
- a sensor signal is obtained by the sensor device (9), wherein the obtained sensor signal depends from a coating state in the actual cutting region (11), and wherein
- at least one cutting parameter is chosen based on the sensor signal.

## Description

The invention relates to a method and a cutting device for cutting a coated substrate with an energy beam.

When cutting a coated substrate with an energy beam, there may occur, for different reasons, situations, in which either a coating material will be directly irradiated by the energy beam, or a substrate material will be exposed to the energy beam. This may, e.g., be the case when cutting electrode foils for batteries in a notching mode, in which a borderline between a coated region and an uncoated region of the coated substrate is repeatedly crossed, or when the coated substrate is cut in a multi-pass mode, layer by layer, wherein the energy beam is repeatedly displaced over the coated substrate along a same irradiation line, or - in other words - a same cutting trajectory, and wherein first the coating material is ablated - optionally in different coating material layers -, and optionally thereafter the finally exposed substrate material is cut. It is difficult or nearly impossible to predict an exact location at which a transition between different materials, like the coating material and the substrate material or different material layers, will happen during the actual cutting process, be it because the coated substrate is transversely shifting - about up to 0.5 mm - in a continuous roll-to-roll process, or because a width of the coating material varies locally, such that a location of the transverse transition will be randomly distributed, or because there is some thickness - or in other words height - variation in the coating material or coating material layers such that a location of the axial transition will be randomly distributed; a respective distribution of at least one of these parameters will at least not be known beforehand. Therefore, typically the same cutting parameters are used for all materials, in particular the coating material as well as the substrate material. This is suboptimal, to say the least, from a quality and reproducibility perspective, since these cutting parameters will inevitably be a compromise, such that the cutting results will not be optimal for neither a coated region nor the uncoated substrate material.

It is therefore an objective of the invention to provide a method and a cutting device for cutting a coated substrate with an energy beam, wherein preferably quality and/or reproducibility of the cutting process is improved.

This objective is achieved by providing the present technical teachings, in particular the teachings of the independent claims as well as the teachings of the dependent claims and the preferred embodiments disclosed in the description.

According to a first aspect, the objective is in particular achieved by providing a method for cutting, with an energy beam, a coated substrate, comprising a substrate material and a coating material wherein
- during cutting the coated substrate, an actual cutting region is monitored by a sensor device, wherein
- a sensor signal is obtained by the sensor device, wherein the obtained sensor signal depends from a coating state in the actual cutting region, and wherein
- at least one cutting parameter is chosen based on the sensor signal.

By choosing the at least one cutting parameter based on the sensor signal, it is no longer necessary to apply the same cutting parameters throughout the process, but instead optimised cutting parameters can be used for different regions and/or materials. Thus, preferably, both quality and reproducibility of the cutting process is improved.

In particular, the obtained sensor signal may be different when a coating material is arranged in the actual cutting region from when a substrate material is exposed in the actual cutting region. **In** addition, or in the alternative, the obtained sensor signal may be different when a first coating material layer is arranged in the actual cutting region from when a second coating material layer is arranged in the actual cutting region, different from the first coating material layer.

In particular, the sensor device is adapted to obtain a sensor signal which depends from the coating state.

In particular, the sensor signal is obtained by the sensor device such that the obtained sensor signal depends from the coating state.

Preferably, the energy beam is selected from a group, consisting of an electromagnetic beam, in particular an optical beam, in particular a laser beam, and a particle beam, in particular an electron beam. The optical beam may be continuous or pulsed, in particular a continuous laser beam or a pulsed laser beam.

In particular, at least in regions of the coated substrate the coating material is arranged on the substrate material, or - in other words - the substrate material is coated with the coating material at least in regions. In the following, "partially coated" is understood to mean that the coating material is only arranged in regions on the substrate material, i.e. there is at least one uncoated region in which no coating material is arranged on the substrate material.

Thus, in the context of the present technical teachings, the coated substrate in particular comprises the coating material on the substrate material.

The coated substrate may comprise a plurality of material layers. In a most simple case, the substrate material is a first material layer - i.e. a substrate material layer -, and the coating material is a second material layer of the total of the two material layers.

In an embodiment, the coating material may comprise a plurality of coating material layers, wherein the different coating material layers may differ in particular with respect to their porosity, and/or with respect to their chemical composition. Thus, the coated substrate may comprise more than two material layers, in particular three or more material layers, e.g. the substrate material is a first material layer, a first coating material layer is a second material layer, and a second coating material layer is a third material layer.

In a further embodiment, the coating material may be arranged - in other words "sandwiched" - between substrate material layers, wherein optionally the coating material may comprise a plurality of coating material layers, e.g. in an all-solid-state battery (ASSB). The substrate material layers may comprise different substrate materials, in particular an anode material on the one hand and a cathode material on the other hand.

The substrate material is also known as a current collector and may consist of copper (anode) or aluminium (cathode). The coating material also known as active material may consist of graphite (anode) or nickel manganese cobalt oxide NMC (cathode) or lithium iron phosphate LFP (cathode).

In particular, the actual cutting region is understood to mean a region, where - or in which - the cutting momentarily takes place during the cutting process.

That the actual cutting region is monitored by the sensor device in particular includes that the sensor device is adapted and arranged to observe the actual cutting region, in particular, the sensor device is directed towards the actual cutting region.

Thus, the coating state is directly visible to the sensor device. E.g., when the coating material is arranged in the actual cutting region, the substrate material preferably is concealed for the sensor device by the coating material. Otherwise, when the substrate material is exposed in the actual cutting region, the substrate material is exposed to the sensor device, i.e. not concealed by the coating material; in particular, the sensor device looks directly at - or has a direct viewing line to - the substrate material.

The sensor signal may be a simple value of a physical quantity, varying in time, e.g., a voltage. **In** the alternative, the sensor signal may comprise more complex data, in particular a data structure.

The obtained sensor signal may have at least one first feature when a first coating state applies, e.g. an uncoated state, when the substrate material is exposed in the actual cutting region, and at least one second feature, different from the first feature, when a second coating state applies, e.g. a coated state, when the coating material is arranged in the actual cutting region. The at least one first feature may be a first voltage, in particular a first mean voltage, and the second feature may be a second voltage, in particular a second mean voltage, wherein a mean voltage is preferably understood to mean a moving average or a floating mean of a temporally fluctuating voltage signal. The at least one first feature may also be a first signal amplitude, and the second feature may be a second signal amplitude. In an embodiment, the at least one first feature may include that the sensor signal is higher than a predefined threshold, and the second feature may include that the sensor signal is lower than the predefined threshold. The obtained sensor signal may have more than two features for more than two coating states, respectively.

In an embodiment, a transition between the coating material and the substrate material is detected on the basis of the sensor signal. In addition, or in the alternative, a transition between different coating material layers, in particular a transition between a first coating material layer and a second coating material layer, different from the first coating material layer, is detected on the basis of the sensor signal.

The term transition is understood to mean, from a procedural point of view, that, prior to making the transition, the energy beam directly irradiates a first material layer, and after having made the transition, the energy beam directly irradiates a second material layer, different from the first material layer. In particular, the first material layer may be a coating material layer, and the second material layer may be a substrate material layer, or - in other words - the substrate material. Further, the first material layer may be a first coating material layer, and the second material layer may be a second coating material layer, different from the first coating material layer.

The transition may be a transverse transition, wherein a transverse transition is understood to mean a transition transverse or perpendicular to the energy beam's direction of propagation, or - in other words - a transition along a cutting direction, i.e. a direction of displacement of the energy beam on a substrate plane. In particular, in a transverse transition the energy beam crosses a borderline between a first uncoated region and a second coated region, either crossing from the first region to the second region or from the second region to the first region.

In the alternative, the transition may be an axial transition, wherein an axial transition is understood to mean a transition along the energy beam's direction of propagation, i.e. in a depth direction of the cutting process. For example, if the energy beam ablates the coated substrate layer by layer in a multi-pass cutting process, the energy beam will first directly irradiate a first material layer in at least one first cutting step or sequence of first cutting steps, and then directly irradiate a second material layer in at least one second cutting step or sequence of second cutting steps. This may be repeated depending from the kind and number of material layers present at the cutting site.

In an embodiment, an all-solid-state-battery (ASSB) is processed in the multi-pass mode, layer by layer, by the energy beam.

In the context of the present technical teachings, the at least one cutting parameter is in particular understood to mean a parameter which at least in part - i.e., together with other parameters, or taken alone - determines the cutting process. The at least one cutting parameter may be a beam parameter of the energy beam. In addition, or in the alternative, the at least one cutting parameter may be a machine parameter of a cutting device adapted to apply the energy beam in the cutting process, or the at least one cutting parameter may be a process parameter of the cutting process other than a beam or machine parameter.

**In** an embodiment, the at least one cutting parameter is selected from a group, consisting of a waveform of the energy beam, a wavelength or frequency of the energy beam, a pulse duration or pulse length of the pulsed energy beam, a pulse frequency of the pulsed energy beam, a duty cycle of the pulsed energy beam, a spot size or focus size of the energy beam, a focal position of the energy beam, a pulse energy of the pulsed energy beam, a beam power of the energy beam, a cutting velocity, in particular a velocity of displacement of the energy beam in the substrate plane, and a combination of at least two of these cutting parameters.

**In** the context of the present technical teachings, that the at least one cutting parameter is chosen based on the sensor signal is in particular understood to mean that the least one cutting parameter is determined, set or adjusted based on the sensor signal.

That the at least one cutting parameter is chosen, set or adjusted, in particular means that a parameter value for the at least one cutting parameter is chosen, set or adjusted.

In addition, or in the alternative, that the at least one cutting parameter is chosen based on the sensor signal is in particular understood to mean that the least one cutting parameter is chosen depending from the sensor signal.

In an embodiment, the at least one cutting parameter is automatically chosen based on the sensor signal.

In addition, or in the alternative, the at least one cutting parameter is chosen in real time based on the sensor signal.

In particular, when the at least one cutting parameter is changed, also the sensor signal changes upon the change in the cutting parameter, even if there is no change in the coating state. However, the change caused in the sensor signal due to a change in the cutting parameter is much smaller than the change, which the sensor signal experiences due to the transition, such that the transition can always be detected unambiguously, independent of a specific parameter value which is momentarily used for the at least one cutting parameter.

In an embodiment, the at least one cutting parameter is chosen based on the sensor signal in a - in particular open - control loop, i.e., the at least one cutting parameter is controlled depending from the sensor signal.

In an embodiment, the coating state is selected from a group, consisting of the uncoated state, the coated state, and at least one specific coated state. As already mentioned above, the uncoated state is a state in which no coating material is present and thus the substrate material is exposed. The coated state is a state in which coating material is arranged on the substrate material. A specific coated state is a state corresponding to the presence of a specific property of a material layer visible to the sensor device, or a specific material of the material layer, e.g., a specific porosity of the coating material or a specific coating material.

In an embodiment, the coated substrate, in particular the substrate material, is partially coated and comprises at least the first uncoated region, in which the coating state is the uncoated state, and the second coated region, such that in the second region the coating state is the coated state. Thus, the obtained sensor signal is different when the actual cutting region is in the first region from when the actual cutting region is in the second region.

In addition, or in the alternative, the coated substrate comprises a plurality of different material layers, and the specific coating state is different in the different material layers. In this case, the coating state is a specific coating state assigned to the respective material layer which is momentarily visible to the sensor device. In particular, the specific coating state depends on the specific material layer.

In a particular embodiment, a first material layer of the plurality of different material layers may be a coating material layer, and a second material layer may be a substrate material layer, or - in other words - the substrate material. In another particular embodiment, the first material layer may be a first coating material layer, and the second material layer may be a second coating material layer, different from the first coating material layer.

In the context of the present technical teachings, an uncoated region is in particular understood to mean a region of the coated substrate, where no coating material is arranged on the substrate material, i.e. the coating material is absent in the uncoated region, or - in other words - the uncoated region is free of the coating material. Similarly, a coated region is in particular understood to mean a region of the coated substrate, where the substrate material is coated with the coating material, i.e. the coating material is present in the coated region, or - in other words - the coated region comprises the coating material on or above the substrate material.

In an embodiment, the coating state is determined, and the at least one cutting parameter is chosen depending from the determined coating state.

In addition, or in the alternative, it is determined, based on the sensor signal, whether the actual cutting region is in the first region or in the second region, and the at least one cutting parameter is chosen depending from the determined region.

In an embodiment, based on the sensor signal, in particular based on a change of the sensor signal, a transverse transition between the first region and the second region, or vice versa, is detected. Advantageously, it is possible to switch very fast between different parameter values for the at least one cutting parameter upon detection of the transition, such that optimised parameter values can be used in either the first and the second region. For example, when cutting is performed with a displacement velocity of the energy beam of 2 m/s on the substrate plane, and the sensor signal is sampled with 250 kHz, one data point of the sensor signal is obtained every 8 µm. Switching between parameter values of the at least one cutting parameter can be made in less than 20 µs, preferably in less than 15 µs, such that switching is complete after the energy beam has travelled a distance of at most 40 µm, preferably at most 30 µm. This is more than sufficient for all practical purposes in order to cut the different regions with optimised parameter values, respectively.

In an embodiment, the sensor signal may be sampled with 5 kHz to 1000 kHz, in particular between 20 kHz and 50 kHz.

Detection of the transverse transition is particularly relevant in a notching mode cutting process, in which a cutting trajectory of the energy beam repeatedly crosses the borderline between the first region and the second region. In this respect, in an embodiment of the method, the coated substrate is cut in a notching mode.

In the context of the present technical teachings, a notching mode cutting processes in particular is understood to mean a process wherein the cutting trajectory follows a contour line which repeatedly deviates from a straight direction.

Detection of the transverse transition is further relevant, if local or temporal variations of the borderline between the first region and the second region relative to a cutting site, i.e. an interaction site of the coated substrate with the energy beam, occur. This is, e.g., the case where the coated substrate is cut in a continuous process, like a roll-to-roll process or on a conveyor belt. **In** this respect, in an embodiment of the method, the coated substrate is cut in a continuous process, in particular in a roll-to-roll process or on a conveyor belt.

In addition, or in the alternative, based on the sensor signal, in particular based on a change of the sensor signal, an axial transition between the coating material and the substrate material is detected.

In addition, or in the alternative, based on the sensor signal, an axial transition between a first coating material layer and a second coating material layer is detected. There may be more than two coating material layers, and the step may be repeated in order to detect more than one axial transitions.

Detection of an axial transition is in particular relevant in a multi-pass cutting process, in which the energy beam is repeatedly displaced along a same predetermined cutting trajectory in order to ablate the coated substrate layer by layer, and in which the energy beam first directly irradiates a first material layer in at least one first cutting step or sequence of first cutting steps along a the predetermined cutting trajectory, and then directly irradiates a second material layer in at least one second cutting step or sequence of second cutting steps. This may be repeated depending from the kind and number of material layers present at the cutting site. In this respect, in an embodiment of the method, the coated substrate is cut in a multi-pass process, in particular in a slitting mode in which straight cuts are made, i.e. the predetermined cutting trajectory is a straight line.

In an embodiment, the at least one cutting parameter - namely its parameter value - is changed, in particular immediately, upon detecting the - transverse or axial - transition. Advantageously, it is possible to switch very fast between different parameter values for the at least one cutting parameter upon detection of the transition, such that optimised parameter values can be used in the exposure of different materials which are directly irradiated by - or in other words in plain sight of - the energy beam.

In an embodiment, the at least one cutting parameter is set to a parameter value which depends from the coating state, and which preferably is selected from at least a first parameter value and a second parameter value. The first parameter value is assigned to a first coating state, and the second parameter value is assigned to a second coating state of the coating states.

In an embodiment, the first parameter value is assigned to the first region, or to the substrate material, and the second parameter value is assigned to the second region, or to the coating material. Advantageously, the first parameter and the second parameter value can be optimised to the different regions, or different materials, respectively. In another embodiment, the first parameter value is assigned to the substrate material, the second parameter value is assigned to a first coating material layer, and a third parameter value is assigned to a second coating material layer.

There may be more than two or more than three parameter values, assigned to more than two or more than three coating states, respectively. The first parameter value and the second parameter value, and optionally more parameter values, are preferably predetermined.

In particular, the parameter value is selected from the first parameter value and the second parameter value, or more parameter values, based on - or depending from - the sensor signal.

In an embodiment, an optical sensor device is used as the sensor device, the optical sensor device receiving and processing at least one optical signal. This is a simple, cost-efficient and reliable embodiment of the sensor device. The optical signal may be converted to and processed as at least one electric or electronic signal, in particular as at least one voltage. The optical sensor device may be a camera.

In an embodiment, the optical sensor device comprises at least one photodiode. **In** this way, the optical sensor device may be both very reliable, have a high sampling rate, and be cost-efficient.

In an embodiment, the optical sensor device comprises a plurality of photodiodes, in particular three photodiodes. Advantageously, with a plurality of photodiodes, the effectiveness of the choice of the at least one cutting parameter, and in particular the reliability of the transition detection, can be further enhanced. In particular, the different photodiodes of the plurality of photodiodes may be sensitive at different wavelengths.

In an embodiment, the optical sensor device comprises a first photodiode, sensitive at a first wavelength, a second photodiode, sensitive at a second wavelength, and a third photodiode, sensitive at a third wavelength. Thus, advantageously, signals at different wavelengths can be evaluated in order to choose the at least one cutting parameter, in particular in order to detect the transition.

In an embodiment, the first wavelength is in the visible range. In the alternative, or in addition, the second wavelength is in the near IR. In the alternative, or in addition, the third wavelength is a peak wavelength of the energy beam. This combination of wavelengths has been proven to be particularly effective in order to choose the at least one cutting parameter, in particular in order to detect the transition.

In an embodiment, the at least one cutting parameter is chosen based on a signal of the at least one photodiode. In particular, the coating state is determined based on a signal of the at least one photodiode.

In an embodiment, the at least one cutting parameter is chosen based on all - preferably combined - signals of all photodiodes, in particular on all three - preferably combined - signals of the three photodiodes. In particular, the signals are evaluated in combination with each other. This may further enhance the reliability and effectiveness of the choice of the at least one cutting parameter, in particular of the transition detection. In particular, the coating state is determined based on all signals of all photodiodes.

In an embodiment, a laser beam is used as the energy beam. Advantageously, this is a very effective choice of the energy beam in order to cut the coated substrate. In particular, the laser beam may have its peak wavelength in the range of 1030 nm to 1070 nm.

In an embodiment, the substrate material is a foil. In particular, the substrate material may be a metal foil. In an embodiment, the substrate material is a battery foil, in particular an electrode foil for a lithium-ion battery, or an ASSB. In addition, or in the alternative, the substrate material may be a cathode foil or an anode foil.

The coating material may be a paste-like mass arranged on a metal foil as the substrate material.

In the case of a cathode foil, the coating material may be a mixture of an active mass, e.g. lithium metal oxide - in particular lithium nickel manganese cobalt oxide (NMC), preferably with the general formula LiNiₓMn_{y}Co_{1-x-y}O₂ -, or lithium iron phosphate (LFP), conductive carbon black, a binder, and a solvent. The metal foil may be aluminum, in particular with a typical thickness of 10 µm to 20 µm. The thickness of the coating material may be in the order of 70 µm to 200 µm.

In the case of an anode foil, the coating material may be a mixture of graphite, silicon, conductive carbon black, a binder, and a solvent. The metal foil may be copper, in particular with a typical thickness of 8 µm to 15 µm. The thickness of the coating material may be in the range of 50 µm to 1500 µm.

In an embodiment, the coated substrate is cut in the notching mode, as explained above. In addition, or in the alternative, the coated substrate is cut in the slitting mode and/or in the in the multi-pass mode, as also explained above.

In an embodiment, at least one abnormality is detected based on the sensor signal. Advantageously, the sensor signal can also be used, in particular in addition to the transition detection and respective choice of the at least one cutting parameter, to monitor at least one of the cutting process and the coated substrate, in particular in order to detect any abnormalities in either the process or the coated substrate.

Preferably, for detecting the at least one abnormality, the complete sensor signal is analysed.

In this respect, an abnormality is in particular understood to mean a process abnormality or a defect in the coated substrate, be it in the coating material or in the substrate material.

In an embodiment, the at least one abnormality is selected from a group consisting of a focal shift, a burr, a droplet, a stick out, and a combination of at least two of these abnormalities. E.g., a focal shift leads to a complete or local shift of the sensor signal, wherein a complete shift of the sensor signal is characteristic for a global focal shift, and a local shift of the sensor signal is characteristic for a local focal shift, which may be due to partially contaminated or obscured optics of the energy beam. A reduced power of the energy beam may be detected by a decrease of the sensor signal.

In the context of the present technical teachings, a focal shift is understood to mean a displacement of a focal position of the energy beam relative to the coated substrate, in particular in axial direction. The focal position may change due to a change in the substrate position and/or due to a change in a position of a beam source for the energy beam. In particular, the focal position may change due to oscillations of the coated substrate which typically moves very fast beneath the beam source in a roll-to-roll process and/or on a conveyor belt.

In the context of the present technical teachings, a burr is in particular understood to mean a local transversal or axial projection beyond a mean position of either the substrate material or the coating material.

In the context of the present technical teachings, a droplet is in particular understood to mean a - in particular at least nearly spherical or spherical - accumulation of metal, in particular the metal of the substrate material, on the substrate material or on the coating material.

In the context of the present technical teachings, a stick out is in particular understood to also mean a local transversal or axial projection beyond a mean position of either the substrate material or the coating material, wherein the term "stick out" is similar and sometimes used interchangeably with the term "burr".

In a second aspect, the objective is also achieved by providing a cutting device for cutting a - in particular partially - coated substrate, the cutting device comprising
- a beam source, adapted to generate an energy beam for cutting the coated substrate with the energy beam;
- a sensor device, adapted and arranged to monitor an actual cutting region during a cutting process and to thereby obtain a sensor signal, and
- a control device operatively connected to the sensor device and to the beam source, the control device being adapted to evaluate the obtained sensor signal and to choose at least one cutting parameter based on the sensor signal.

With respect to the cutting device, in particular the same advantages are achieved as explained above in relation to the method.

In an embodiment, the cutting device is adapted to carry out a method according to the invention or according to at least one of the embodiments as disclosed above.

In an embodiment, the beam source comprises a deflecting device, the deflecting device being adapted to displace the energy beam on a substrate plane of the coated substrate. The deflecting device may comprise at least one movable mirror, or an acousto-optic deflector (AOD) for a laser beam, or controllable electrical plates or magnets, in particular controllable electromagnetic coils, for a particle beam.

In an embodiment, the sensor device is an optical sensor device, adapted to receive and process at least one optical signal, namely light or an electric or electronic signal, in particular a voltage, obtained from detected light.

In an embodiment, the optical sensor device comprises at least one photodiode.

In an embodiment, the optical sensor device comprises a plurality of photodiodes, in particular three photodiodes. In particular, different photodiodes of the plurality of photodiodes may be sensitive at different wavelengths.

In particular, the optical sensor device comprises a first photodiode, sensitive at a first wavelength, a second photodiode, sensitive at a second wavelength, and a third photodiode, sensitive at a third wavelength.

In an embodiment, the first wavelength is in the visible range. In the alternative, or in addition, the second wavelength is in the near IR. In the alternative, or in addition, the third wavelength is a peak wavelength of the energy beam, in particular 1030 nm to 1070 nm.

In an embodiment, the beam source comprises a laser source. Preferably, the laser source comprises the deflecting device. In particular, the laser source may have its peak wavelength in the range of 1030 nm to 1070 nm.

The invention is explained below in further detail with reference the drawing. In the drawing
- Figure 1: schematically shows an embodiment of a cutting device for cutting a coated substrate, and a first embodiment of a method for cutting the coated substrate;
- Figure 2: schematically shows a second embodiment of the method, and
- Figure 3: schematically shows a detail of the first or second embodiment of the method.

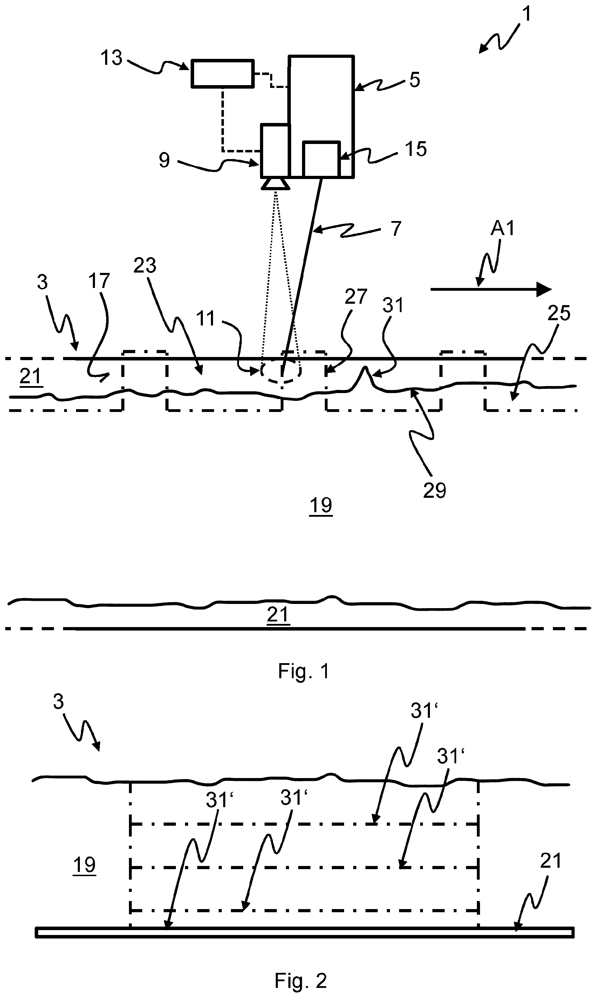

**Fig. 1** schematically shows an embodiment of a cutting device 1 for cutting a coated substrate 3.

The cutting device 1 for cutting the - in particular partially - coated substrate 3 comprises a beam source 5, adapted to generate an energy beam 7 for cutting the coated substrate 3 with the energy beam 7, a sensor device 9, adapted and arranged to monitor an actual cutting region 11 during a cutting process and to thereby obtain a sensor signal, and a control device 13 operatively connected to the sensor device 9 and to the beam source 5. The control device 13 is adapted to evaluate the obtained sensor signal and to choose at least one cutting parameter based on the sensor signal.

In figure 1, the coated substrate 3 is schematically shown from above, or as seen from the sensor device 9.

The beam source 5 preferably comprises a deflecting device 15, the deflecting device 15 being adapted to displace the energy beam 7 on a substrate plane 17 of the coated substrate 3.

The beam source 5 preferably is a laser source comprising the deflecting device 15. The laser source may have its peak wavelength in the range of 1030 nm to 1070 nm.

The sensor device 9 preferably is an optical sensor device, which is adapted to receive and process at least one optical signal. In a preferred embodiment, the sensor device 9 comprises three photodiodes, in particular a first photodiode, sensitive at a first wavelength in the visible range, a second photodiode, sensitive at a second wavelength in the near IR, and a third photodiode, sensitive at a third wavelength, the third wavelength preferably being the peak wavelength of the energy beam 7.

The cutting device 1 is adapted to carry out a method for cutting, with the energy beam 7, the - partially - coated substrate 3.

In such a method, during cutting the coated substrate 3, the actual cutting region 11 is monitored by the sensor device 9, a sensor signal is obtained by the sensor device 9, and the obtained sensor signal depends from a coating state in the actual cutting region 11. In particular, the obtained sensor signal is different when a coating material 19 is arranged in the actual cutting region 11 from when a substrate material 21 is exposed to the sensor device 9 in the actual cutting region 11. Further, at least one cutting parameter is chosen based on the sensor signal, preferably automatically and in real time, most preferably in an - open - control loop.

The at least one cutting parameter preferably is selected from a group, consisting of a waveform of the energy beam 7, a wavelength or frequency of the energy beam 7, a pulse duration or pulse length of the pulsed energy beam 7, a pulse frequency of the pulsed energy beam 7, a duty cycle of the pulsed energy beam 7, a spot size or focus size of the energy beam 7, a focal position of the energy beam 7, a pulse energy of the pulsed energy beam 7, a beam power of the energy beam 7, a cutting velocity, in particular a velocity of displacement of the energy beam 7 in the substrate plane 17, and a combination of at least two of these cutting parameters.

Preferably, a transition between different materials or different material layers, in particular between the coating material 19 and the substrate material 21, or between different coating material layers, is detected on the basis of the sensor signal. The transition may be a transverse transition or an axial transition.

In the first embodiment of the method shown in figure 1, the transition is a transverse transition. The coated substrate 3 is only partially coated and comprises at least a first uncoated region 23 and a second coated region 25, and the obtained sensor signal is different when the actual cutting region 11 is in the first region 23 from when the actual cutting region 11 is in the second region 25. Preferably, it is determined, based on the sensor signal, whether the actual cutting region 11 is in the first region 23 or in the second region 25, and the at least one cutting parameter is chosen depending from the determined first or second region 23, 25.

The first embodiment here shows a notching mode cutting process, in which a cutting trajectory 27 of the energy beam 7 repeatedly crosses a borderline 29 between the first region 23 and the second region 25. Detection of the transverse transition is in particular relevant, if local or temporal variations of the location of the borderline 29 relative to a cutting site, i.e. an interaction side of the coated substrate 3 with the energy beam 7, occur. Here, the coated substrate 3 is cut in a continuous process, like a roll-to-roll process or on a conveyor belt, the coated substrate 3 being transported with high velocity relative to the beam source 5 along a transport direction indicated by an arrow A1, while the position of the coated substrate 3 is randomly shifting perpendicular to the transport direction about up to 0.5 mm. Thus, also the borderline 29 randomly shifts perpendicular to the transport direction about up to 0.5 mm relative to the beam source 5.

Preferably, at least one abnormality is detected based on the sensor signal. The at least one abnormality may be selected from a group consisting of a focal shift, a burr 31, a droplet, a stick out, and a combination of at least two of these abnormalities. The burr 31 in this case is a local transverse projection of the coating material 19 beyond a mean position of the borderline 29 on the substrate material 21.

**Fig. 2** schematically shows a second embodiment of the method for cutting the coated substrate 3.

The same or functionally equivalent elements are assigned the same reference numerals in all figures, such that reference is made in each case to the preceding explanations.

In figure 1, the coated substrate 3 is schematically shown from the side, perpendicular to the view of figure 1.

In the second embodiment, based on the sensor signal, in particular based on a change of the sensor signal, an axial transition between the coating material 19 and the substrate material 21 is detected. In particular, in this second embodiment, a multi-pass cutting process is carried out, in which the energy beam 7 is repeatedly displaced along a same predetermined straight cutting trajectory 31' in order to ablate the coated substrate 3 layer by layer, and in which the energy beam 3 first directly irradiates the coating material 19 in a first sequence of - in this case three - cutting steps along the predetermined cutting trajectory 31', and then, finally, directly irradiates the substrate material 21 in at least one - in this case exactly one - second cutting step, or a second sequence of cutting steps, along the predetermined cutting trajectory 31'. It is also possible, that the coating material 19 comprises different coating material layers; in this case, an axial transition - or more than one axial transition - may be detected during the first sequence of cutting steps, and the at least one cutting parameter may be changed depending from the respective specific coating material layer along the predetermined cutting trajectories 31'.

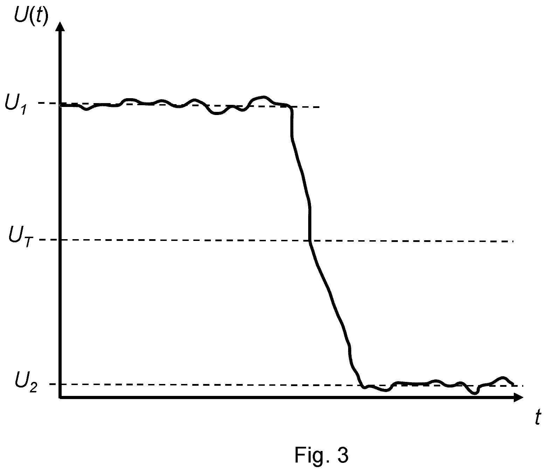

**Fig. 3** schematically shows a detail of the method according to the first or second embodiment.

The obtained sensor signal may have at least one first feature, when a first coating state applies, e.g., when the substrate material 21 is exposed in the actual cutting region 11, and at least one second feature, different from the first feature, when a first coating state applies, e.g., when the coating material 19 is arranged in the actual cutting region 11.

In the embodiment shown here, the sensor signal is a voltage *U*(*t*) of one of the three photodiodes which varies in time *t,* and the first feature is a first mean voltage *U₁* above a predefined threshold *U_{T},* and the second feature is a second mean voltage *U₂* below the predefined threshold *U_{T}.* The transition is detected when the voltage *U*(*t*) - or a floating mean thereof - crosses the predefined threshold *U_{T}.*

When the at least one cutting parameter is changed, also the sensor signal changes upon the change in the cutting parameter. However, the change caused in the sensor signal due to a change in the cutting parameter is much smaller than the change which the sensor signal experiences due to the transition, such that the predefined threshold *U_{T}* will not be crossed upon just changing the parameter values, and the transition can be detected unambiguously, independent of a specific parameter value which is momentarily used for the at least one cutting parameter.

Preferably, the at least one cutting parameter is chosen based on all - preferably combined - signals of all three photodiodes, i.e. the signals are evaluated in combination with each other.

## Claims

1. Method for cutting, with an energy beam (7), a coated substrate (3), comprising a substrate material (21) and a coating material (19) wherein
- during cutting the coated substrate (3), an actual cutting region (11) is monitored by a sensor device (9), wherein
- a sensor signal is obtained by the sensor device (9), wherein the obtained sensor signal depends from a coating state in the actual cutting region (11), and wherein
- at least one cutting parameter is chosen based on the sensor signal.

2. Method according to claim 1, wherein
- the coating state is selected from a group, consisting of an uncoated state, a coated state, and at least one specific coated state, wherein optionally
- the coated substrate (3) is partially coated and comprises at least a first uncoated region (23), in which the coating state is the uncoated state, and a second coated region (25), the second region (25) being coated with the coating material (19), such that in the second region (25) the coating state is the coated state, and/or
- the coated substrate (3) comprises a plurality of different material layers, and the specific coating state is different in the different material layers.

3. Method according to at least one of the preceding claims, wherein, based on the sensor signal, the coating state is determined, and the at least one cutting parameter is chosen depending from the determined coating state.

4. Method according to at least one of the preceding claims, wherein based on the sensor signal, in particular based on a change of the sensor signal,
- a transverse transition between the first region (23) and the second region (25), or vice versa, is detected, and/or
- an axial transition between the coating material (19) and the substrate material (21) is detected, and/or
- an axial transition between a first coating material layer and a second coating material layer is detected,
- and the at least one cutting parameter is changed upon detecting the transition.

5. Method according to at least one of the preceding claims, wherein the at least one cutting parameter is set to a parameter value which depends from the coating state, and which preferably is selected from at least a first parameter value and a second parameter value, wherein the first parameter value is assigned to a first coating state, and the second parameter value is assigned to a second coating state.

6. Method according to at least one of the preceding claims, wherein an optical sensor device is used as the sensor device (9), the optical sensor device receiving and processing at least one optical signal.

7. Method according to claim 6, wherein the optical sensor device comprises at least one photodiode, preferably a plurality of photodiodes, in particular three photodiodes, preferably
- a first photodiode, sensitive at a first wavelength, in particular in the visible range,
- a second photodiode, sensitive at a second wavelength, in particular in the near IR, and
- a third photodiode, sensitive at a third wavelength, in particular at a peak wavelength of the energy beam (7).

8. Method according to claim 7, wherein the at least one cutting parameter is chosen based on a signal of the at least one photodiode, in particular based on all signals of all photodiodes, preferably based on all three signals of the three photodiodes.

9. Method according to at least one of the preceding claims, wherein a laser beam is used as the energy beam (7).

10. Method according to at least one of the preceding claims, wherein the substrate material (21) is a foil, in particular a battery foil, preferably a cathode foil or an anode foil, in particular of a lithium-ion battery, or an ASSB.

11. Method according to at least one of the preceding claims, wherein the coated substrate (3) is cut in notching mode, or in a slitting mode.

12. Method according to at least one of the preceding claims, wherein at least one abnormality is detected based on the sensor signal, wherein preferably the at least one abnormality is selected from a group consisting of a focal shift, a burr, a droplet, a stick out, and a combination of at least two of these abnormalities.

13. Cutting device (1) for cutting a coated substrate (3), the cutting device (1) comprising
- a beam source (5), adapted to generate an energy beam (7) for cutting the coated substrate (3) with the energy beam (7);
- a sensor device (9), adapted and arranged to monitor an actual cutting region (11) during a cutting process and to thereby obtain a sensor signal, and
- a control device (13) operatively connected to the sensor device (9) and to the beam source (5), the control device (13) being adapted to evaluate the obtained sensor signal and to choose at least one cutting parameter based on the sensor signal, wherein
- preferably, the cutting device (1) is adapted to carry out a method according to at least one of claims 1 to 12.

14. Cutting device (1) according to claim 13, wherein the sensor device (9) is an optical sensor device, adapted to receive and process at least one optical signal, the optical sensor device preferably comprising at least one photodiode, preferably a plurality of photodiodes, in particular three photodiodes, preferably
- a first photodiode, sensitive at a first wavelength, in particular in the visible range,
- a second photodiode, sensitive at a second wavelength, in particular in the near IR, and
- a third photodiode, sensitive at a third wavelength, in particular at a peak wavelength of the energy beam (7).

15. Cutting device (1) according to at least one of claims 13 and 14, wherein the beam source (5) comprises a laser source.
